# EUROPÄISCHE PATENTSCHRIFT

(11) **EP 3 465 850 B1**
(45) Veröffentlichungstag und Bekanntmachung des Hinweises auf die Patenterteilung: **13.11.2019**
(21) Anmeldenummer: 17713596.9
(22) Anmeldetag: 16.03.2017
(51) Int. Cl.: H02B 1/52, G01D 4/00, G06Q 20/14, G07F 15/00

(54) **MOBILER BAUSTELLENSCHRANK SOWIE SERVER ZUM STEUERN EINER STEUEREINRICHTUNG EINES MOBILEN BAUSTELLENSCHRANKS**
MOBILE CONSTRUCTION SITE CABINET AND SERVER FOR CONTROLLING A CONTROL DEVICE OF A MOBILE CONSTRUCTION SITE CABINET
ARMOIRE DE DISTRIBUTION DE CHANTIER MOBILE ET SERVEUR POUR COMMANDER UN DISPOSITIF DE COMMANDE D'UNE ARMOIRE DE CHANTIER MOBILE

(30) Priorität: 02.06.2016 DE 102016110175
(43) Veröffentlichungstag der Anmeldung: 10.04.2019
(73) Patentinhaber: INNOGY SE, 45128 Essen (DE); Westnetz GmbH, 44139 Dortmund (DE)
(72) Erfinder: GRÖNNER, Jürgen, 46236 Bottrop (DE); GAUL, Armin, 59379 Selm (DE)
(74) Vertreter: Cohausz & Florack
(86) Internationale Anmeldenummer: PCT/EP2017/056206
(87) Internationale Veröffentlichungsnummer: WO 2017/207126

(56) Entgegenhaltungen:
- DE-A1- 4 243 092
- DE-A1- 19 813 342
- DE-A1- 19 957 424
- DE-U1- 9 410 037

## Beschreibung

Der Gegenstand betrifft einen mobilen Baustellenschaltschrank, einen Server zum Steuern einer Steuereinrichtung in einem mobilen Baustellenschaltschrank sowie ein Verfahren zum Betreiben einer Steuereinrichtung in einem mobilen Baustellenschaltschrank.

Mobile Baustellenschaltschränke sind in der Regel auf Baustellen installiert. Dort schließen verschiedenste Unternehmer/Gewerke ihre elektrischen Geräte an. Für jedes Gewerk auf einer Baustelle werden unterschiedlichste elektrische Geräte benötigt. Jedes Gewerk bezieht während der Bauzeit elektrischen Strom von dem Baustellenschaltschrank. Der Baustellenschaltschrank wird in der Regel mit der Baustelleneinrichtung aufgestellt. Häufig ist nur ein einfaches Vorhängeschloss vor dem Schaltschrank angebracht, womit dieser gesichert ist. Ein Handwerker schließt nach ggf. vorher eingeholter Genehmigung und Öffnung des Baustellenschaltschranks ein Verlängerungskabel oder das Gerät selbst an einer Anschlussdose in dem Baustellenschaltschrank an.

Die Abrechnung der bezogenen Energie erfolgt derzeit aber lediglich gegenüber dem Bauherren bzw. dem Generalunternehmer. In einem Baustellenschaltschrank ist nur ein einziger Stromzähler installiert, der den gesamten Baustrom erfasst und eine Abrechnung ermöglicht. Eine Abrechnung je nach Gewerk, insbesondere abhängig davon, wie viel Energie ein Gewerk benötigt hat, ist bisher nicht möglich. Dies ist nicht zufriedenstellend, da beispielsweise ein Baukran erheblich mehr elektrische Energie benötigt, als eine Kreissäge oder eine Stichsäge.

Aus der DE94 10 037 U1 ist ein Schaltschrank bekannt, bei welchem eine Anschlussdose erst nach erfolgreicher Authentifizierung freigegeben wird.

Es kommt häufig zu Problemen der elektrischen Absicherung der Anschlüsse. Da der Schaltschrank in der Regel durch ein Vorhängeschloss gesichert ist, schließen viele Handwerker ihre Geräte an einer Verteilung außerhalb des Baustellenschranks an. Dann kann es dazu kommen, dass die bezogene Leistung zu groß wird und in dem Baustellenschrank eine Sicherung auslöst. Ein manuelles Eingreifen wird in diesem Fall notwendig, was zu Kosten führt. Jedoch ist in der Regel nicht nachweisbar, wer oder was zu der auslösenden Überlast geführt hat, so dass diese Kosten dem Verursacher nicht zugeordnet werden können.

Somit lag dem Gegenstand die Aufgabe zugrunde, die Abrechnung von Baustrom transparenter zu machen.

Diese Aufgabe wird gegenständlich durch einen mobilen Baustellenschrank nach Anspruch 1 gelöst.

Der mobile Baustellenschrank hat, wie herkömmliche Baustellenschränke auch, ein Gehäuse. In dem Gehäuse, welches beispielsweise durch einen Deckel oder eine Tür verschlossen werden kann, sind zumindest zwei elektrische Anschlussdosen vorgesehen. Die Anschlussdosen können dabei herkömmliche Steckdosen, Drehstromdosen, Starkstromdosen oder dergleichen sein.

Darüber hinaus wird vorgeschlagen, dass in dem Gehäuse zumindest ein Schalter vorgesehen ist, der zumindest einer der Anschlussdosen zugeordnet ist. Mit Hilfe des Schalters kann die elektrische Verbindung zwischen der Zuleitung zu dem Baustellenschrank und der jeweiligen Anschlussdose geöffnet oder geschlossen werden. Der Schalter ist dabei vorzugsweise elektromotorisch oder elektromagnetisch, insbesondere in Form eines Relais, betriebener Schalter, der ferngesteuert werden kann, wie dies nachfolgend noch beschrieben werden wird.

Der mobile Baustellenschrank hat zumindest einen zumindest einem der Schalter zugeordneten Zähler. Mit Hilfe des Zählers kann die über die jeweilige Anschlussdose bezogene elektrische Energie gemessen werden. Der Zähler ist dabei beispielsweise ein elektronischer Zähler, insbesondere in Form eines sogenannten Smart Meters. Der Zähler ist vorzugsweise fernauslesbar, insbesondere verfügt der Zähler über Kommunikationsmittel, mit deren Hilfe ein Fernauslesen möglich ist. Dieses Fernauslesen kann beispielsweise über eine Weitverkehrsverbindung erfolgen. Hierzu kann der Zähler beispielsweise ein Kommunikationsmodul aufweisen. Auch kann der Zähler berührungslos ausgelesen werden, beispielsweise mit einem entsprechenden Auslesegerät. Das Auslesen kann beispielsweise auch optisch erfolgen, insbesondere über eine optische Schnittstelle. Das Auslesen kann auch via einer Nahfeldkommunikation z.B. NFC, Bluetooth, ZigBEE oder dergleichen erfolgen. Der Baustellenschrank ist elektrisch über einen elektrischen Anschlusspunkt innerhalb des Gehäuses mit einem elektrischen Verteilnetz verbunden. Das elektrische Verteilnetz kann dabei insbesondere ein Ortsnetz, beispielsweise ein Niederspannungsnetz, beispielsweise mit einer Spannungsebene von 0,4 kV sein. Es ist jedoch auch möglich, insbesondere auf Großbaustellen, das der Anschlusspunkt ein Anschluss an einem Mittelspannungsnetz ermöglicht. Dieser elektrische Anschlusspunkt ist innerhalb des Gehäuses zumindest über den zumindest einen Zähler und den zumindest einen Schalter mit den Anschlussdosen elektrisch verbindbar. D.h., dass der elektrische Strom von dem elektrischen Anschlusspunkt über den Zähler und den Schalter zu den Anschlussdosen fließen kann.

Eine transparente Abrechnung des Baustroms ist nur dann möglich, wenn die Nutzung des Baustroms einem Nutzer zugeordnet werden kann. Dies ist bisher nicht der Fall, da viele verschiedene Nutzer gleichzeitig und/oder nacheinander auf den Baustellenschrank zugreifen und den Strom, der über einen einzigen Zähler erfasst wird, beziehen. Gegenständlich ist nun erkannt worden, dass eine transparente Abrechnung dadurch möglich ist, dass eine in dem Gehäuse angeordnete Steuereinrichtung dazu eingerichtet ist, zumindest einen der Schalter abhängig von einer Authentifizierung und/oder Autorisierung zu schließen und dabei einen Anfangszählerstand des dem geschlossenen Schalter zugeordneten Zählers zu erfassen. In diesem Zusammenhang sei erwähnt, dass wenn von Authentifizierung wird, stets damit gemeint ist, dass eine Authentifizierung eine Autorisierung nach sich zieht und eine erfolgt Authentifizierung auch in der Regel zu einer Autorisierung führt. Somit sind die Begriffe, soweit dies nicht anders beschrieben ist, gleichbedeutend und austauschbar verwendbar.

Es ist erkannt worden, dass mit Hilfe von Authentifizierungen eine Zuordnung des genutzten Stroms zu einzelnen Nutzern möglich ist. Die Authentifizierung erfolgt gegenständlich vorzugsweise in dem eine Nutzerkennung oder ein Freigabesignal an die Steuereinrichtung übermittelt wird. Die Steuereinrichtung ist dabei vorzugsweise über ein Weitverkehrsnetz, insbesondere über ein Mobilfunknetz mit einem sogenannten Back-End Server verbunden.

Der Back-End Server verfügt über Authentifizierungsmechanismen, mit denen Nutzer sich authentifizieren können. So ist es beispielsweise möglich und ebenfalls ein Gegenstand der Anmeldung, dass eine mobile Applikation, die insbesondere auf einem mobilen Endgerät, beispielsweise einem Mobilfunkgerät installiert ist, diese Authentifizierung ermöglicht. Ein Nutzer kann in der mobilen Applikation Auswahlmittel betätigen, mit denen er einen Baustellenschrank auswählen kann. In den Auswahlmittel können beispielsweise alle Kennungen von Baustellenschränken hinterlegt sein, auf die der Nutzer möglicherweise Zugriff hat. Diese Zuordnung kann in dem Back-End Server erfolgen. Der Back-End Server kann diese Information an die Applikation senden.

Nach Auswahl des gewünschten Baustellenschranks kann der Nutzer beispielsweise eine Nutzerkennung und/oder ein Nutzerpasswort eingeben. Diese Nutzerinformation wird von der mobilen Applikation entgegengenommen und gesichert an den Back-End Server übermittelt. In dem Back-End Server kann nun eine Überprüfung der Berechtigung des Nutzers erfolgen.

Anschließend empfängt die mobile Applikation von dem Back-End Server ein Bestätigungssignal und daraufhin kann es die mobile Applikation dem Nutzer über ein Freigabemittel ermöglichen, einen bestimmten Baustellenschrank insbesondere auch eine bestimmte Anschlussdose innerhalb des Baustellenschranks freizuschalten. Welche Anschlussdosen innerhalb des Baustellenschranks freischaltbar sind, kann in dem Back-End Server hinterlegt sein und zusammen beispielsweise mit dem Freigabesignal an die mobile Applikation gesendet werden. Nachdem der Nutzer einer Freigabe erteilt hat, kann diese Information zunächst an den Back-End Server übertragen werden. Von dort erfolgt ein Freigabesignal über das Weiteverkehrsnetz an die Steuereinrichtung. Diese Kommunikation kann ebenfalls gesichert sein, so dass nur ein zertifizierter Back-End Server einen Baustellenschrank, insbesondere eine Steuereinrichtung darin ansteuern und ein Freigabesignal zur Autorisierung des Schließens des Schalters zu empfangen. Insbesondere kann alternativ oder kumulativ zu der serverseitigen Freigabe auch lokal ein Authentifizierungsversuch erfolgen. Hierbei kann lokal, in einem Speicher des Baustellenschranks eine Datenbank/Liste mit lokal gespeicherten Authentifizierungsinformationen vorhanden sein, so dass das Backend für eine Freigabe ggf. nicht immer verfügbar sein muss. Die Datenbank/Liste kann regelmäßig aktualisiert werden.

Empfängt die Steuereinrichtung nun dieses Freigabesignal, welches die Authentifizierung bedingt hat, kann die Steuereinrichtung den Schalter schließen. Während des Schließens, d.h. kurz vor dem Schließen, unmittelbar während des Schließens oder kurz nach dem Schließen, kann ein Zählerstand des Zählers erfasst werden, der dem Schalter zugeordnet ist, der gerade geschlossen wird.

Somit ist es möglich, den Zählerstand, insbesondere den Anfangszählerstand einem bestimmten Nutzer zuzuordnen, da dieser sich vor dem Schließen des Schalters authentifiziert hat. Der Anfangszählerstand kann beispielsweise von der Steuereinrichtung über geeignete Kommunikationsmittel an den Back-End Server übermittelt werden.

Es ist auch möglich, wie zuvor bereits angedeutet, dass die Steuereinrichtung über lokale Lesemittel verfügt, insbesondere über Nahfunk, beispielsweise NFC oder Nahbereichsfunk, beispielsweise Bluetooth oder WLAN. Über diese Funkschnittstelle ist es möglich, eine Authentifizierung vor Ort durchzuführen. Ein Nutzer kann beispielsweise einen sogenannten Token mit sich führen, auf dem Nutzerinformationen hinterlegt sind. Wenn er diesen Token nun an der Steuereinrichtung verwendet, kann die Steuereinrichtung über eine Funkkommunikation die Nutzerinformation aus dem Token, insbesondere gesichert, auslesen. Anschließend kann die Steuereinrichtung entweder lokal, durch einen Vergleich mit lokal gespeicherten Authentifizierungsinformationen oder serverseitig, durch Kommunikation mit einem Back-End Server, die Nutzerkennung überprüfen und feststellen, ob der Nutzer zur Freigabe bzw. Schließen eines Schalters autorisiert ist. Somit authentifiziert der Nutzer sich gegenüber der Steuereinrichtung und bei einer erfolgreichen Authentifizierung kann er dazu autorisiert sein, einen Schalter zu schließen. Anstelle der Tokens kann auch eine Kommunikation durch die mobile Applikation erfolgen.

Ist eine Autorisierung vorhanden, kann der Nutzer beispielsweise über ein Eingabemittel an der Steuereinrichtung eingeben, welchen Schalter er schließen möchte.

Auch kann die Steuereinrichtung beispielsweise für einen bestimmten Zeitraum, beispielsweise ein bis zwei Minuten nach Authentifizierung / Autorisierung alle noch nicht verbundenen Anschlussdosen überwachen und prüfen, an welcher Anschlussdose ein Anschließen eines Steckers erfolgt. Diese Anschlussdose wird dann dem Nutzer zugeordnet und der entsprechende Schalter geschlossen. Dabei erfolgt auch das Erfassen des Anfangszählers, welche dem soeben authentifizierten Nutzer zugeordnet werden kann.

Wie bereits erläutert, kann sowohl die Authentifizierung als auch die Autorisierung über einen Server und/oder lokal erfolgen. Hierfür wird vorgeschlagen, dass die Steuereinheit mit einem Kommunikationsmodul zur Kommunikation über ein Weitverkehrsnetz mit einem entfernten Server oder der mobilen Applikation eingerichtet ist. Das Kommunikationsmodul ist zur Kommunikation insbesondere über ein Mobilfunknetz, insbesondere einem GSM-Netz, einem UMTS-Netz, einem LTE-Netz oder dergleichen eingerichtet. Auch kann das Kommunikationsmodul zur Kommunikation über ein Drahtlosnetz, beispielsweise ein WLAN-Netz eingerichtet sein. Das Kommunikationsmodul verfügt über geeignete Verschlüsselungsalgorithmen, um die Kommunikation mit dem entfernten Server oder mobilen Applikation gesichert durchzuführen. Insbesondere ermöglicht das Kommunikationsmodul eine Ende-zu-Ende-Verschlüsselung zwischen dem Kommunikationsmodul und dem Server bzw. der mobilen Applikation.

Das Kommunikationsmodul ist dazu eingerichtet, Freigabesignale in Reaktion auf eine Authentifizierung, ggf. von dem entfernten Server zu empfangen und dieses Freigabesignal an die Steuereinrichtung weiterzuleiten. Das Freigabesignal kann als stellvertretend für eine Authentifizierung verstanden werden. Auch kann das Freigabesignal bei einer lokalen Authentifizierung unter Verwendung der lokal gespeicherten Informationen, wie oben beschrieben, generiert werden.

Das Kommunikationsmodul kann dazu eingerichtet sein, Zählerstände von der Steuereinheit und/oder dem Zähler zu empfangen und an den entfernten Server zu übermitteln. Hierbei kann die Übermittlung eines Zählerstandes zusammen mit einer Zähler-Kennung (ID) und/oder einer Schalter-Kennung (ID) erfolgen. Auch kann eine Anschluss-Kennung (ID) dem Zählerstand zugeordnet sein. Somit kann eine lückenlose Kontrolle der bezogenen elektrischen Energie erfolgen, insbesondere kann nachvollzogen werden, über welchen Zähler, welchen Schalter und/oder welche Anschlussdose die elektrische Energie bezogen wurde.

Da zuvor eine Authentifizierung stattgefunden hat, kann der Zählerstand auch einem bestimmten Nutzer zugeordnet werden.

Das beschriebene gilt natürlich auch für einen Endzählerstand, der zum Ende einer Nutzung erfasst werden kann, wie nachfolgend noch beschrieben werden wird.

Wie bereits erwähnt, kann die Steuereinrichtung überwachen, ob ein Anschluss eines Steckers an einer einem Schalter zugeordneten Anschlussdose erfolgt. Zum einen kann dieses Überwachen unmittelbar nach der Authentifizierung erfolgen, um festzustellen, welcher Stecker genutzt wird. Dann kann beispielsweise ein Schließen des Schalters erfolgen. Andererseits ist es auch möglich, dass wenn ein Stecker bereits in eine Dose eingesteckt wurde und der Schalter bereits geschlossen ist, der Anschluss dieses Steckers an der dem geschlossenen Schalter zugeordneten Anschlussdose zu überwachen. Durch diese Überwachung kann festgestellt werden, wenn eine Nutzung beendet wird. Insbesondere kann mit Hilfe des Überwachungsmoduls der Zeitpunkt des Endes einer Nutzung festgestellt werden. Dies ermöglicht es, zum Ende einer Nutzung den Schalter zu öffnen und/oder einen Endzählerstand zu erfassen. Der Nutzer kann somit sicher sein, dass, nachdem er den Stecker abgezogen hat, ein Beziehen von elektrischem Strom über die von ihm zuvor freigegebene Anschlussdose nicht mehr erfolgen kann.

Gemäß einem Ausführungsbeispiel wird vorgeschlagen, dass die Steuereinrichtung zum Erfassen eines Endzählerstands des Zählers eingerichtet ist, an dessen zugeordneter Anschlussdose ein Abziehen eines Steckers detektiert wurde. Das Überwachungsmodul kann der Steuereinrichtung anzeigen, wenn ein Stecker gezogen wurde. Ferner kann das Überwachungsmodul beispielsweise die die Anschlussdose identifizierende Anschlussdosenkennung übermitteln. Da die Steuereinrichtung die Zuordnung zwischen Anschlussdose, Schalter und Zähler kennt, kann die Steuereinrichtung anhand dieser Information den entsprechenden Zähler auslesen, der der Anschlussdose zugeordnet ist, an welcher der Stecker abgezogen wurde.

Dieser Endzählerstand kann, wie bereits hinsichtlich des Anfangszählerstands beschrieben, an einen zentralen Server zu Abrechnungszwecken übermittelt werden.

Auch ist es möglich, dass ein Anfangszählerstand und ein Endzählerstand zunächst in der Steuereinrichtung erfasst werden und erst nach Ende des Nutzungsvorgangs, also wenn der Endzählerstand ausgelesen wurde, eine Information zu Anfangs- und Endzählerstand oder eine Information zu einer Differenz aus Endzählerstand und Anfangszählerstand an den zentralen Server übermittelt werden.

Um sicherzustellen, dass kein Unberechtigter nach Abziehen des Steckers von der Anschlussdose elektrischen Strom von dieser Anschlussdose bezieht, wird vorgeschlagen, dass die Steuereinrichtung zum Öffnen des Schalters eingerichtet ist, an dessen zugeordnete Anschlussdose ein Abziehen eines Steckers detektiert wurde. Erfasst das Überwachungsmodul ein Abziehen eines Steckers, wird dies an die Steuereinrichtung gemeldet. Die Steuereinrichtung kann dann beispielsweise den Schalter mittels eines Signals aktivieren, so dass dieser geöffnet wird. Möchte der Nutzer erneut an dieser Anschlussdose Strom beziehen, muss er den zuvor beschriebenen Authentifizierungs- und Autorisierungsvorgang erneut durchlaufen.

Auch ist es möglich, einen Strombezug für einen bestimmten Zeitraum zu ermöglichen. So ist es beispielsweise möglich, dass einer Authentifizierung bzw. einer Nutzerkennung eine Nutzungsdauer zugeordnet ist. Auch kann während des Authentifizierungsvorgangs eine Nutzungsdauer angegeben werden. Insbesondere kann beispielsweise eine Nutzungsdauer von acht bis zehn Stunden einem Nutzer zugeordnet sein. Der Bauarbeiter, der sich am Morgen authentifiziert und somit ein Schließen eines Schalters autorisiert, kann nun für die nächsten acht bis zehn Stunden elektrischen Strom beziehen. Danach wird automatisch der Schalter geöffnet, so dass sichergestellt ist, dass zu Nachtstunden kein unberechtigtes Beziehen von elektrischem Strom möglich ist. Möchte der Nutzer weiter Strom beziehen, muss er nach Ablauf der Nutzungsdauer einen erneuten Authentifizierungs- und Autorisierungsvorgang durchführen.

Auch kann der Nutzer beispielsweise über die mobile Applikation während des Authentifizierungsvorgangs eine gewünschte Zeitdauer seiner Nutzung als Zusatzdaten angeben. Diese Zusatzdaten, die während der Authentifizierung angeben werden, können ebenfalls von der mobilen Applikation an den Server bzw. lokal an die Steuereinrichtung übermittelt werden. Abhängig von der eingegebenen Nutzungsdauer oder der dem Nutzer zugeordneten Nutzungsdauer wird der Schalter für die entsprechende Dauer geschlossen.

Zum Ende der Nutzungsdauer wird der Schalter geöffnet. Die Steuereinrichtung ist zum Erfassen eines Endzählerstands des Zählers, der dem so geschlossenen Zeitschalter zugeordnet ist, nach Ablauf der Nutzungsdauer eingerichtet. D.h., dass wenn die Nutzungsdauer abgelaufen ist, der Endzählerstand erfasst wird und wie zuvor beschrieben, dieser Zählerstand an den Server zu Abrechnungszwecken kommuniziert wird.

Es kann vorteilhaft sein, dass genau ein Schalter genau einer Anschlussdose zugeordnet ist. Dann lässt sich jede einzelne Anschlussdose einzeln ansteuern. Dies ist insbesondere für Drehstromdosen sinnvoll, da über diese sehr große Leistungen abgerufen werden und somit auch große Energiemengen genutzt werden können. Es wird vorgeschlagen, genau eine Anschlussdose mit einem Schalter zu aktivieren oder zu deaktivieren.

Auf der anderen Seite kann es auch im Nutzerinteresse sein, mehrere Anschlussdosen mit nur einem Authentifizierungsvorgang freizuschalten. In diesem Fall wird vorgeschlagen, dass jeweils ein Schalter einer Mehrzahl an Anschlussdosen zugeordnet ist. In einem Baustellenschrank können beide zuvor beschriebenen Konfigurationen vorhanden sein. So ist es möglich, dass in einem einzigen Baustellenschrank ein oder mehrere Schalter vorgesehen sind, die genau einer Anschlussdose zugeordnet sind und gleichzeitig ein oder mehrere Schalter, die jeweils einer Mehrzahl an Anschlussdosen zugeordnet sind.

Ähnliches gilt für die Zuordnung von Zählern zu Schaltern. Es kann sinnvoll sein, genau einen Schalter genau einem Zähler zuzuordnen. Andererseits kann es auch sinnvoll sein, jeweils einen Zähler einer Mehrzahl an Schaltern zuzuordnen.

Gerade auf Baustellen ist die Nutzung des Baustellenschranks unübersichtlich. Der Nutzer ist nicht stets in der Nähe des Baustellenschranks und der Baustellenschrank ist häufig einer großen Anzahl an Nutzern zugänglich. Um Stromklau zu verhindern, möchte der Nutzer sicher sein, dass wenn er eine Authentifizierung durchgeführt hat, nur er an der entsprechenden Anschlussdose elektrischen Strom beziehen kann. Um ein Abziehen des von dem autorisierten Nutzer angesteckten Steckers von der Anschlussdose zu verhindern, wird vorgeschlagen, dass die Steuereinrichtung zum Ansteuern eines an einer Anschlussdose angeordneten Sperrmoduls eingerichtet ist. Das Sperrmodul ist dazu eingerichtet, einen Stecker an der Anschlussdose mechanisch zu ver- und entriegeln. Nach einer erfolgten Authentifizierung steuert die Steuereinrichtung das Sperrmodul zum mechanischen Verriegeln eines an der Anschlussdose angeschlossenen Steckers an. Das Sperrmodul wird aktiviert und verriegelt den Stecker mechanisch an der Anschlussdose. Dann kann nur der Nutzer, der sich zuvor authentifiziert hat, den Strom von der Anschlussdose nutzen, der auch den entsprechenden Stecker in die Anschlussdose eingesteckt hat.

Zum Entriegeln des Steckers kann entweder ein Authentifizierungsvorgang entsprechend dem bereits Beschriebenen zum Freigeben eines Schalters erfolgen oder der Stecker kann nach dem Ablauf einer Nutzungsdauer automatisch entriegelt werden. Die Steuereinrichtung ist daher ferner dazu eingerichtet, das Sperrmodul zum mechanischen Entriegeln des an der Anschlussdose angeschlossenen Steckers zu aktivieren. Diese Aktivierung kann, wie erwähnt, zum Ende einer Nutzungsdauer oder aufgrund einer erneuten Authentifizierung und Autorisierung des Nutzers erfolgen.

In der mobilen Applikation kann dem Nutzer beispielsweise angezeigt werden, welche Anschlussdosen er derzeit nutzt. Der Nutzer kann über eine graphische Nutzeroberfläche die entsprechende Anschlussdose anwählen, die er freigeben will. Nach Eingabe von entsprechenden Nutzerinformationen können die Informationen an den Back-End Server und/oder an die Steuereinrichtung übermittelt werden und die entsprechende Anschlussdose kann freigegeben werden.

Auch ist es möglich, dass in der Steuereinrichtung gespeichert ist, welche Nutzerkennung zur Freigabe welches Schalters und mithin zur Freigabe welcher Anschlussdosen genutzt wurde. Empfängt die Steuereinrichtung erneut die entsprechende Nutzerkennung bzw. wird der Steuereinrichtung diese Nutzerkennung mitgeteilt, kann die Steuereinrichtung in der gespeicherten Zuordnung prüfen, welche Schalter und/oder welche Anschlussdosen zugeordnet sind und die entsprechenden Schalter öffnen und/oder die entsprechenden Sperrmodule zum mechanischen Entriegeln aktivieren.

Neben der sicheren Abrechnung ist stets die elektrische Sicherheit zu gewährleisten. Das bedeutet, dass in einem Baustellenschaltschrank stets ein Fehlstromschutzschalter vorgesehen sein sollte. Dieser Fehlstromschutzschalter kann ebenfalls von der Steuereinrichtung angesteuert werden. Die Steuereinrichtung kann dazu eingerichtet sein, abhängig von einer Authentifizierung einen einer Anschlussdose zugeordneten Fehlstromschutzschalter zu schließen. Dies kann insbesondere dann sinnvoll sein, wenn ein Fehlstromschutzschalter während einer autorisierten Nutzung öffnet. Dann kann der Nutzer den Fehlstromschutzschalter ohne den Schaltschrank zu öffnen, mit Hilfe der Steuereinrichtung und seiner Authentifizierung wieder schließen.

Häufig kommt es zu elektrischen Überlastungen in Baustellenschaltschränken. Diese Überlastungen sind problematisch, da sie zu manuellen Eingriffen, insbesondere auch zum Austausch von Sicherungen führen können. Darüber hinaus werden die Bauteile in dem Baustellenschaltschrank über Gebühr belastet und gegebenenfalls beschädigt. Um das Auftreten von Überlasten zu minimieren, wird auch vorgeschlagen, dass der Baustellenschaltschrank, insbesondere der Zähler und/oder die Steuereinrichtung eingerichtet sind, eine elektrische Leistung oder Stromstärke zu erfassen. Der Zähler und/oder die Steuereinrichtung und/oder ein Schalter ist dazu eingerichtet, bei einem Überschreiten der erfassten elektrischen Leistung oder der elektrischen Stromstärke über einen Grenzwert, den zugeordneten Schalter zu öffnen. D.h., dass der Schalter vorzugsweise vor dem Auslösen einer Sicherung geöffnet wird. Hierzu ist insbesondere der Grenzwert der Stromstärke unterhalb des Auslösestroms für die elektrische Sicherung. Somit wird der Schalter geöffnet, wenn der Grenzwert erreicht wird, d.h. wenn der Strom nahe an dem Auslösestrom der elektrischen Sicherung ist, diesen aber noch nicht erreicht hat.

Der Nutzer erhält durch die Öffnung zunächst eine Vorwarnung, da er das elektrische Gerät, welches an der entsprechenden Anschlussdose angeschlossen ist, nicht mehr nutzen kann. Um es bei der Vorwarnung zu belassen, wird der entsprechende Schalter zunächst nur für eine definierte Zeit geöffnet. Beispielsweise kann ein Öffnen von fünf Minuten sinnvoll sein. Der Nutzer bekommt somit eine Rückmeldung, dass er gegebenenfalls einen zu hohen Strom von der Anschlussdose bezieht. Ferner kann es möglich sein, die Anzahl der Auslösungen des Schalters aufgrund des Überschreitens des Grenzwertes, wie oben beschrieben, zu zählen und bei einem Überschreiten einer gewissen Anzahl, beispielsweise fünf, den Schalter dauerhaft zu öffnen.

Der Nutzer kann über die mobile Applikation eine Information darüber erhalten, dass der Schalter aufgrund eines Überstroms geöffnet wurde. Hierzu wird eine entsprechende Information im Falle des Öffnens des Schalters aufgrund einer drohenden Überlast von der Steuereinrichtung ausgesendet. Auch kann der Nutzer über die mobile Applikation eine Information, durch Aussenden durch die Steuereinrichtung, darüber erhalten, dass der Schalter mit einer gewissen Häufigkeit geöffnet wurde. Auch kann der Nutzer eine Information, durch Aussenden durch die Steuereinrichtung, darüber erhalten, dass die Anzahl der Öffnungen ein Grenzwert überschritten hat und der Schalter geöffnet bleibt. Alle Informationen können in der mobilen Applikation von der Steuereinrichtung, ggf. über den Server via des Weitverkehrsnetzes empfangen werden.

Auch wird vorgeschlagen, dass der dem Zähler zugeordnete Schalter erst nach einer erneuten Authentifizierung geschlossen wird. Hierzu kann der Zähler, die Steuereinrichtung und/oder der Schalter der das Überschreiten des Grenzwertes entdeckt hat, auf eine entsprechende Authentifizierung warten und nach erfolgter Authentifizierung kann der Schalter geschlossen werden. Ein Einschalten ist dann nur nach einer erneuten Authentifizierung möglich, wobei ein Nutzer, der eine Überlast verursacht hat, ggf. für eine weitere Nutzung zunächst gesperrt wird, also keine Freigabe des Schalters mehr bewirken kann.

In dem Baustellenschaltschrank kann ein Kommunikationsmodul vorgesehen sein. Mit Hilfe des Kommunikationsmoduls ist es möglich, eine zumindest einen Schalter identifizierende Schalterkennung zu empfangen. Ferner kann eine einen Nutzer identifizierende Nutzerkennung empfangen werden. Zunächst kann der Server beispielsweise von einer mobilen Applikation oder auch von der Steuereinrichtung in dem Baustellenschaltschrank eine Nutzerkennung empfangen. Die Nutzerkennung kann über die mobile Applikation eingegeben werden oder beispielsweise über ein Token an der Steuereinrichtung des Baustellenschaltschranks ausgelesen werden, wie zuvor beschrieben. Das Kommunikationsmodul empfängt die Nutzerkennung und prüft die Zugriffsberechtigung des entsprechenden Nutzers auf bestimmte Schalter. Anschließend kann der Server entweder an die Steuereinrichtung oder die mobile Applikation eine Information darüber senden, welche Schalter der Nutzer betätigen darf. Der Nutzer kann dann einen entsprechenden Schalter auswählen, entweder über die mobile Applikation oder beispielsweise auch an der Steuereinrichtung des Baustellenschaltschranks. Diese Information wird an den Server übermittelt und dort empfangen. In dem Server kann dann überprüft werden, ob ein autorisierter Schalter ausgewählt wurde. Hierzu als auch zum Überprüfen der Nutzerkennung kann das Prüfmodul vorgesehen sein.

Anschließend erfolgt das Ausgeben eines Autorisierungssignals. Dazu können Freigabemittel vorgesehen sein, die das Autorisierungssignal abhängig von der Überprüfung der Nutzerkennung erzeugen. Das Autorisierungssignal kann dabei vorzugsweise die empfangene Schalterkennung umfassen. Somit kann in dem Autorisierungssignal eindeutig bestimmt werden, welcher Schalter geöffnet oder geschlossen wird. Das Kommunikationsmodul ist dann dazu eingerichtet, das Autorisierungssignal über ein Weitverkehrsnetz zu übertragen. Die Steuereinrichtung in dem Baustellenschaltschrank empfängt dieses Autorisierungssignal und öffnet bzw. schließt den Schalter, dessen Schalterkennung in dem Signal enthalten ist.

Es sei angemerkt, dass die zuvor beschriebene Autorisierung auch unter Umgehung einzelner zuvor beschriebener Schritte durchgeführt werden kann.

Gemäß einem Ausführungsbeispiel wird vorgeschlagen, dass in dem Prüfmodul eine Mehrzahl an Nutzerkennung einer Teilnehmerkennung zugeordnet ist. Nutzerkennungen können beispielsweise Personen zugeordnet sein. Auch können Nutzerkennungen Token zugeordnet sein. Ein Teilnehmer kann beispielsweise ein Bauunternehmer sein, der eine Vielzahl an Beschäftigten hat. Jeder Beschäftigte, der auf einer Baustelle ist, kann eine Nutzerkennung mit sich führen. Die Nutzerkennung sind einer Teilnehmerkennung zugeordnet, so dass eine Abrechnung aller Leistungen, die von Nutzerkennungen, die einer Teilnehmerkennung zugeordnet sind, gegenüber dieser Teilnehmerkennung erfolgen kann. Zu Abrechnungszwecken kann der Server Anfangszählerstand und Endzählerstand sowie Nutzerkennung und Zähler-ID empfangen. In einer Abrechnung können der Anfangszählerstand, der Endzählerstand und die Nutzerkennung angegeben sein. Darüber hinaus kann zusätzlich auch noch eine Kennung eines Baustellenschaltschranks erfolgen. Ist die Nutzerkennung in einem Teilnehmerkreis, die einer Teilnehmerkennung zugeordnet sind, kann die Abrechnung dann an den Teilnehmer mit der entsprechenden Teilnehmerkennung erfolgen. Insbesondere kann nach einem Abrechnungszeitraum eine Sammelrechnung erfolgen. Bei dieser Sammelrechnung können alle Nutzungen von einem Teilnehmer zugeordneten Nutzerkennungen zusammen aufgeschlüsselt werden.

Durch die Prüfung der Nutzerkennung ist eine Autorisierung möglich. Das ermöglicht auch, einzelne Nutzer wahlweise zu autorisieren bzw. von der Autorisierung zu sperren. Insbesondere, wenn beispielsweise ein Mitarbeiter eine Firma verlässt, kann sein Token deaktiviert werden.

Auch ist es möglich, dass Nutzerkennungen für die Autorisierung von bestimmten Baustellenschaltschränken genutzt werden können. Insbesondere können eine Mehrzahl an Baustellen betrieben werden und es kann festgelegt werden, welcher Nutzer auf welcher Baustelle, respektive welche dort aufgestellten Baustellenschaltschränke freischalten kann.

Ein Vorteil der Überprüfung der Nutzerkennung vor Freigabe liegt auch darin, dass im Falle einer Beschädigung des Baustellenschaltschrankes, insbesondere einer bestimmten Steckdose, eine Zuordnung zu dem jeweiligen Nutzer erfolgen kann und somit ein Verschulden für diese Beschädigung nachgewiesen werden kann.

Mit Hilfe des Servers ist es auch möglich, Lastprofile von den jeweiligen Zählern zu empfangen. Die Zähler können Lastprofile aufzeichnen und gegebenenfalls in regelmäßigen Abständen, beispielsweise jeden Tag an den Server übermittelt. Dies ermöglicht es dem Server, die Lastprofile auszuwerten und festzustellen, ob die Infrastruktur auf der Baustelle geeignet ist, den Bedarf zu decken. Insbesondere können Überlasten und die Anzahl an Ausschaltvorgängen aufgrund von Überschreiten von Grenzwerten, wie zuvor beschrieben, aufgezeichnet werden. Dies ermöglicht es, die Anzahl und Auslegung der Baustellenschaltschränke gegebenenfalls im Verlauf eines Bauvorhabens an den tatsächlichen Bedarf anzupassen.

In dem Server kann das Kommunikationsmodul dazu eingerichtet sein, einen Anfangszählerstand und einen Endzählerstand zu empfangen. Auch kann das Kommunikationsmodul dazu eingerichtet sein, einen aus dem Anfangszählerstand und dem Endzählerstand berechneten Differenzzählerstand zu empfangen.

Bei diesem Verfahren wird zunächst eine einen Nutzer identifizierende Nutzerkennung empfangen. Anschließend wir die Nutzerkennung überprüft, insbesondere durch Vergleich der empfangenen Nutzerkennung mit abgespeicherten Nutzerkennungen. Schließlich kann ein Autorisierungssignal erzeugt werden. Dieses Autorisierungssignal wird abhängig von der Überprüfung der Nutzerkennung erzeugt. Insbesondere wird das Autorisierungssignal erzeugt, wenn anhand der Überprüfung der Nutzerkennung festgestellt wurde, dass der entsprechende Nutzer einen bestimmten Schalter freischalten kann. Das Autorisierungssignal kann dabei vorzugsweise eine Schalterkennung umfassen. Eine Schalterkennung kann einen Schalter eindeutig identifizieren. Insbesondere ist es möglich, dass zusammen mit der Nutzerkennung oder davor bzw. danach eine Schalterkennung empfangen werden kann. Die Schalterkennung kann der Nutzer beispielsweise eingeben, insbesondere über eine mobile Applikation oder an dem Baustellenschaltschrank. Dann wird überprüft, ob die entsprechende Nutzerkennung zur Freigabe des Schalters mit der entsprechenden Schalterkennung berechtigt ist und in dem Autorisierungssignal kann die entsprechende Schalterkennung enthalten sein. Schließlich wird das Autorisierungssignal über ein Weitverkehrsnetz übertragen und insbesondere in dem Baustellenschaltschrank empfangen.

Mit Hilfe der vorgestellten Infrastruktur ist es auch möglich, den Zustand von Baustellenschaltschränken einer Ferndiagnose zu unterziehen. So ist es beispielsweise möglich, dass die Steuereinrichtungen den Zustand der Schalter, sowie den Zustand der Fehlstromschutzschalter, soweit vorhanden, überwachen. Auch können Lastprofile überwacht werden. Diese überwachten Informationen können abgespeichert werden und in Abständen an den Server übermittelt werden. Mit Hilfe des Servers kann so der Zustand jedes einzelnen Baustellenschranks, insbesondere der Zustand der Schalter überwacht werden. Auch ist es möglich, dass die Zähler zur aktuellen Leistungserfassung eingerichtet sind. Dann können Leistungsverläufe oder auch aktuelle Leistungen in nahezu Echtzeit an den Server übermittelt werden. In dem Server kann somit eine Übersicht erstellt werden, welche Lasten an welchen Zählern an welchen Baustellenschaltschränken zu welchen Zeiten, insbesondere auch in Echtzeit abgerufen werden.

Der Baustellenschaltschrank kann auch ein weiteres Verriegelungsmittel aufweisen, mit dem die Türe oder der Deckel des Baustellenschaltschranks geöffnet oder geschlossen wird. Das Öffnen oder Schließen der Türe kann bestimmte Autorisierungsstufen bedingen. Insbesondere kann es möglich sein, nur bestimmte Nutzer zum Öffnen des Schaltschranks zu autorisieren. Diese Autorisierung kann bestimmten Nutzerkennungen zugeordnet sein, beispielsweise eine Nutzerkennung eines Elektrikers. Wenn dieser sich über den Server oder unmittelbar an dem Steuergerät mittels eines Token anmeldet, kann er auch dazu autorisiert werden, den Schaltschrank selbst zu öffnen.

Nachfolgend wird der Gegenstand anhand einer Ausführungsbeispiele zeigenden Zeichnung näher erläutert. In der Zeichnung zeigen:
- Fig. 1: einen mobilen Baustellenschaltschrank;
- Fig. 2: eine Steuereinrichtung;
- Fig. 3: ein Aufbau eines Systems mit mobilen Baustellenschaltschränken;
- Fig. 4: den Aufbau eines Servers;
- Fig. 5: eine Anschlussdose.

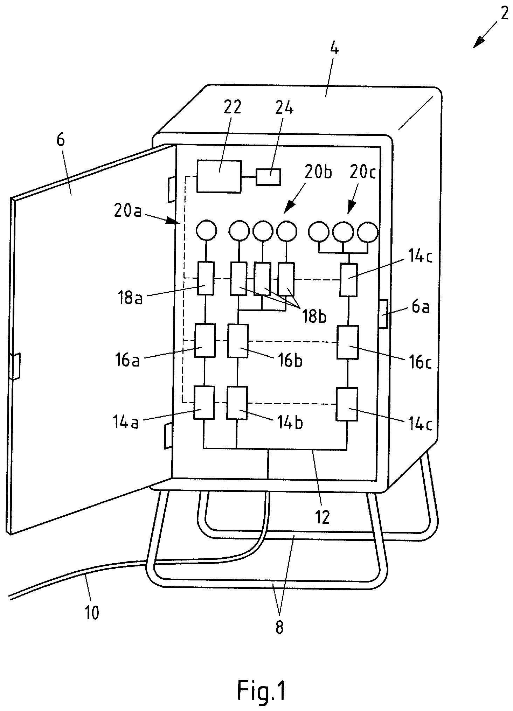

Fig. 1 zeigt einen Baustellenschaltschrank 2 mit einem Gehäuse 4. An dem Gehäuse 4 ist eine verriegelbare Türe 6 und Standfüße 8 angeordnet.

Der Baustellenschaltschrank 2 wird bedarfsweise an einer Baustelle aufgestellt und wieder zum Ende des Bauvorhabens wieder abgebaut. Eine elektrische Zuleitung 10 zu einem elektrischen Verteilnetz wird in das Innere des Gehäuses 4 geführt und über eine Anschlussleiste 12 ein- oder mehrphasig mit den im Baustellenschrank 2 verbauten Komponenten verbunden. Insbesondere ist eine dreiphasige Anbindung des Baustellenschaltschranks 2 an das Verteilnetz sinnvoll. Ausgehend von der Anschlussleiste 12 können Sicherungen 14a-c vorgesehen sein. Gezeigt ist jeweils nur eine Sicherung 14a-c, bei einem mehrphasigen Anschluss ist jedoch pro Phase eine eigene Sicherung 14a-c vorgesehen.

Nach den Sicherungen 14a-c können Strommessgeräte 16a-c vorgesehen sein. Auch ist es möglich, dass die Strommessgeräte 16a-c ausgehend von der Leiste 12 vor den Sicherungen 14a-c angeordnet sind. Die Strommessgeräte 16a-c sind dazu eingerichtet, die elektrische Energie, die über nachgeordneten Anschlussdosen 20a-c bezogen wird, zu messen. Ausgehend von den Strommessgeräten 16a-c sind Schalter 18a-c vorgesehen. Dem Strommessgerät 16a ist genau ein Schalter 18a zugeordnet. Dem Strommessgerät 16b sind drei Schalter 18b zugeordnet und dem Strommessgerät 16c ist wiederum genau ein Schalter 18c zugeordnet.

Nach den Schaltern 18a-c sind elektrische Anschlussdosen 20a-c als Steckdosen vorgesehen. Dem Schalter 18a ist eine Anschlussdose 20a zugeordnet, den Schaltern 18b ist jeweils eine Anschlussdose 20b zugeordnet und dem Schalter 20c sind drei Anschlussdosen 20c zugeordnet.

Ferner ist in dem Baustellenschaltschrank 2 eine Steuereinrichtung 22 sowie ein Kommunikationsmodul 24 vorgesehen.

In der Steuereinrichtung 22, insbesondere in einem Speicher der Steuereinrichtung 22 sind die jeweiligen Zuordnungen zwischen Strommessgeräten 16a-c, Schaltern 18a-c und Anschlussdosen 20a-c gespeichert. Diese Zuordnung kann flexibel programmiert werden, insbesondere bei einer Inbetriebnahme des Baustellenschranks 2 und/oder bei einer Umkonfiguration der Verbindungen.

Insbesondere kann jede Anschlussdose 20a-c und/oder jeder Schalter 18a-c eine eigene Schalterkennung (ID) aufweisen, die den Schalter 18a-c eindeutig zumindest innerhalb des Baustellenschaltschranks 2 kennzeichnet. In dem Speicher der Steuereinrichtung 22 kann zusätzlich eine Kennung (ID) des Baustellenschaltschranks 2 abgespeichert sein.

Die Steuereinrichtung 22 ist in Wirkverbindung zumindest mit den Schaltern 18a-c sowie den Strommessgeräten 16a-c.

Die Sicherungen 14a-c können neben der herkömmlichen Sicherungsfunktion auch als Fehlstromschutzschalter alternativ oder kumulativ ausgestaltet sein. So können die Sicherungen 14a-c aus mehreren seriell geschalteten Sicherungen, insbesondere einem Fehlstromschutzschalter und einem Überstromschutzschalter gebildet sein. Auch eine Wirkverbindung zwischen einem Fehlstromschutzschalter und der Steuereinrichtung 22 kann vorgesehen sein.

Die Schalter 18a-c können motorisch betriebene Schalter sein oder als magnetische Schalter, z.B. als Relais, ausgestaltet sein, die elektrisch angesteuert werden.

Die Sicherungen 14a-c können ebenfalls motorisch oder magnetisch betriebene Sicherungen sein. Über den jeweiligen Antrieb kann die Steuereinrichtung 22 wahlweise die Sicherungen 14a-c oder auch die Schalter 18a-c öffnen oder schließen.

Vorzugsweise kann die Steuereinrichtung 22 jeden einzelnen Schalter 18a-c selektiv ansteuern. Dasselbe gilt für jede einzelne Sicherung 14a-c.

Die Strommessgeräte 16a-c verfügen ebenfalls über eine eindeutige Kennung (ID) und können ihre Messwerte bzw. ihre Zählerstände an die Steuereinrichtung 22 übermitteln.

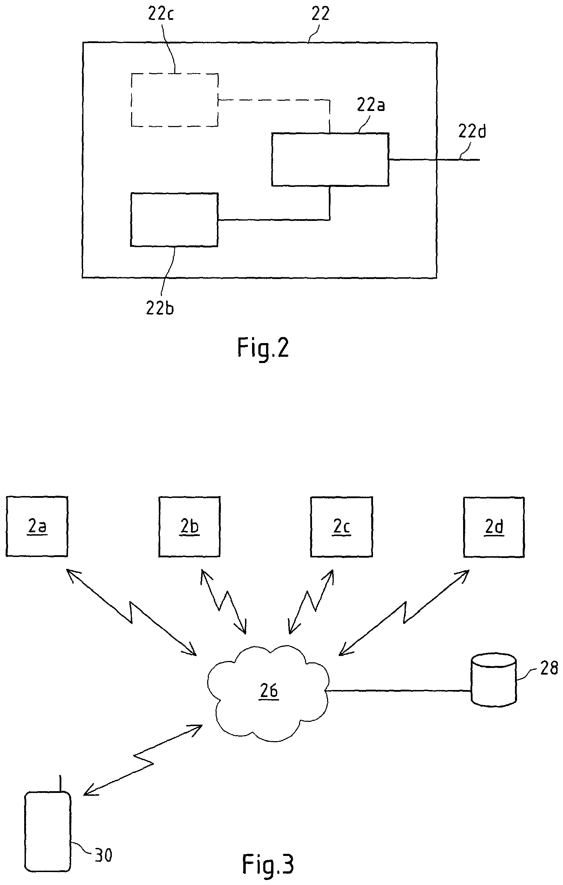

Fig. 2 zeigt schematisch einen Aufbau einer Steuereinrichtung 22. Die Steuereinrichtung 22 verfügt über einen Prozessor 22a, einen Speicher 22b und ein Nahfeldlesegerät 22c, welches optional ist. Ferner verfügt die Steuereinheit 22 über eine Verbindung 22d mit der Kommunikationseinheit 24.

Fig. 3 zeigt schematisch eine Infrastruktur zur Durchführung des gegenständlichen Verfahrens. Ein Weitverkehrsnetz 26, beispielsweise ein Mobilfunknetz und/oder das Internet oder ein sonstiges Kommunikationsnetz bzw. eine Kombination hieraus verbindet einen Server 28 mit verschiedenen Baustellenschränken 2a-d. Ferner kann ein mobiles Gerät, beispielsweise ein Mobiltelefon oder ein sonstiger mobiler Token 30 vorgesehen sein, der gegebenenfalls, wenn er mit Kommunikationsmitteln ausgestattet ist, über das Weitverkehrsnetz 26 kommunizieren kann. Der Token 30 kann jedoch auch nur zur Nahfeldkommunikation ausgestattet sein, was nachfolgend noch beschrieben werden wird.

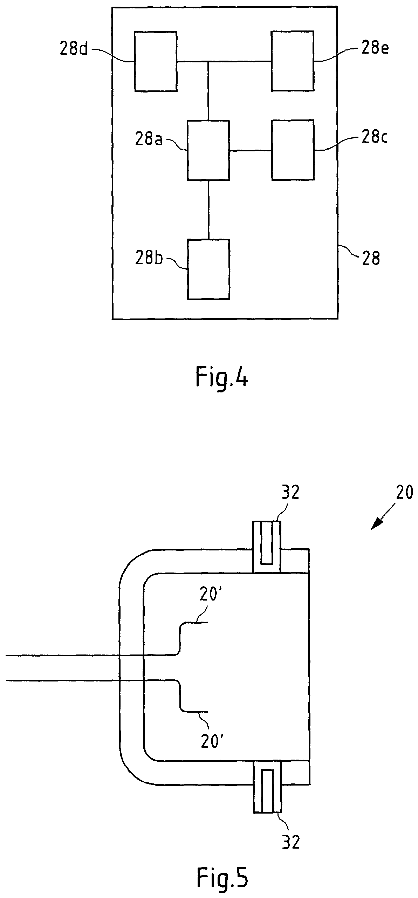

Fig. 4 zeigt einen Server 28 in einer schematischen Darstellung. Der Server 28 verfügt über einen Prozessor 28a und einen Speicher 28b. Als Softwaremodule und/oder als Hardwaremodule innerhalb des Servers 28 kann ein Prüfmodul 28c sowie ein Freigabemodul 28d vorgesehen sein. Schließlich kann in dem Server 28 ein Kommunikationsmodul 28e angeordnet sein. Über das Kommunikationsmodul 28e kann eine Kommunikation mit dem Weitverkehrsnetz 26 und den Baustellenschaltschränken 2a-d sowie gegebenenfalls den Token 30 erfolgen.

Fig. 5 zeigt eine Anschlussdose 20. Zu erkennen ist, dass die Anschlussdose 20 über Steckkontakte 20' verfügt, über die eine elektrische Verbindung mit einen Stecker hergestellt werden kann. Ferner hat die Anschlussdose 20 Verriegelungsmittel 32, die in Wirkverbindung mit der Steuereinheit 22 sind und zum Verriegeln und Entriegeln eines eingesteckten Steckers aktiviert werden können. Dieses Aktivieren kann beispielsweise magnetisch oder motorisch erfolgen.

Zur Nutzung des Baustellenschranks 2 können die nachfolgend beschriebenen Verfahren angewendet werden.

Zunächst wird der Baustellenschrank 2 auf einer Baustelle installiert und die elektrische Zuleitung 10 wird mit der Anschlussleiste 12 befestigt. Anschließend wird die Türe 6 geschlossen und beispielsweise mit Verriegelungsmitteln 6a verriegelt. Die Verriegelungsmittel 6a können ebenfalls in Wirkverbindung mit der Steuereinrichtung 22 sein.

Zur weiteren Installation des Baustellenschranks 2 kann beispielsweise ein Nutzer mit der Autorisierungsstufe "Elektriker" über sein mobiles Token 30 seine Nutzerkennung an den Server 28 senden. In dem Server 28 kann das Prüfmodul 28c aus dem Speicher lesen, welcher Autorisierungsstufe die übermittelte Nutzerkennung hat. Das Prüfmodul 28c stellt fest, dass die Autorisierungsstufe "Elektriker" ist. Anschließend übermittelt das Kommunikationsmodul 28d eine entsprechende Autorisierungsinformation an den Token 30. Darüber hinaus kann das Prüfmodul 28c aus dem Speicher 28b beispielsweise Kennungen von Baustellenschaltschränken 2a-d gelesen haben, bei welchen der entsprechende Nutzer für den Zugriff autorisiert ist. Diese Kennungen können ebenfalls an das Token 30 über das Weitverkehrsnetz 26 übermittelt werden.

In dem Token 30 läuft eine mobile Applikation über die der Nutzer bereits eine Nutzerkennung eingegeben hat. Das mobile Token 30 empfängt die Information zur Autorisierung sowie die Kennungen von den Baustellenschaltschränken, die er bedienen darf.

Auf dem mobilen Token 30 kann der Nutzer dann einen der Baustellenschaltschränke 2a-d auswählen. Hierbei kann es beispielsweise an den Baustellenschaltschränken 2a-d entsprechende Kennungen beispielsweise auch mittels eines Barcodes, eines QR-Codes oder eines NFC Beacons auslesen.

Die Kennung des Baustellenschaltschranks 2a-d, die der Nutzer bedienen will, wird anschließend an den Server 28 übermittelt. In dem Server 28 wird gegebenenfalls in dem Prüfmodul 28c eine erneute Überprüfung durchgeführt, ob der Zugriff autorisiert ist. Dieser Schritt kann auch in dem Token 30 selbst erfolgen.

Anschließend erzeugen die Freigabemittel 28d ein Autorisierungssignal bzw. ein Freigabesignal, welches von dem Kommunikationsmodul 28e über das Weitverkehrsnetz 26 an beispielsweise den Baustellenschaltschrank 2a übermittelt wird. Auch dieser Schritt kann durch das Token 30 unmittelbar ausgeführt werden.

In dem Baustellenschaltschrank 2a wird das Freigabesignal in der Kommunikationseinheit 24 empfangen und von der Steuereinrichtung 22 verarbeitet. Das Freigabesignal enthält Informationen, dass die Verriegelungsmittel 6a zu entriegeln sind. Die Steuereinrichtung aktiviert somit die Verriegelungsmittel 6a entsprechend und der Nutzer kann die Türe 6 öffnen.

Dann kann der Nutzer die Verdrahtung innerhalb des Baustellenschranks 2 so vornehmen, dass die Sicherungen 14a-c, die Strommessgeräte 16a-c, die Schalter 18a-c und die Anschlussdosen 20a-c miteinander verdrahtet werden. Die Zuordnung von Anschlussdosen 20a-c, Schaltern 18a-c und Strommessgeräten 16a-c und gegebenenfalls die Sicherungen 14a-c kann dabei fest vorgegeben sein und beispielsweise in dem Speicher 22b der Steuereinrichtung 22 bereits gespeichert sein. Auch ist es möglich, dass der Nutzer über beispielsweise ein mobiles Token die momentan vorgenommene Zuordnung eingibt und über das Weitverkehrsnetz 26 gegebenenfalls mit Hilfe einer Prüfung durch den Server 28 oder unmittelbar an die Steuereinrichtung 22 sendet. Dort wird diese Zuordnung dann in dem Speicher 22b gespeichert. Nach der Installation schließt der Elektriker die Türe 6 und die Verriegelungsmittel 6a verriegeln.

Dieser Vorgang kann auch von einem anderen Nutzer vorgenommen werden, wenn die Verriegelung nicht exklusiv an die Autorisierungsstufe "Elektriker" geknüpft ist.

Wenn ein Mitarbeiter einer Baufirma nun Strom benötigt, kann er beispielsweise mit seinem mobilen Token 30 an den Nahfeldleser 22 herantreten und seinen mobilen Token an den Nahfeldleser 22 halten. Der Nahfeldleser 22c liest eine Autorisierung aus dem Token 30 aus und übermittelt ein entsprechendes Signal an den Prozessor 22a. Der Prozessor 22a kann diese Nutzerkennung entweder intern über seinen Speicher 22b oder extern mit Hilfe einer Kommunikation mit dem Server 28 überprüfen.

Der Token 30 kann auch ein Mobilgerät sein, welches über das Weitverkehrsnetz 26 mit dem Server 28 und/oder der Steuereinrichtung 22 kommunizieren kann.

Bei einer positiven Überprüfung, also wenn der Nutzer berechtigt ist, Strom zu beziehen, kann der Prozessor 22a selbsttätig oder abhängig von einer Authentifizierung durch den Server 28 die grundsätzliche Freigabe zur Nutzung einer der Anschlussdosen 22a-c geben.

Anschließend wird der Nutzer einen Stecker in eine der Anschlussdosen 20a-c einstecken. Über geeignete Prüfmittel kann überprüft werden, in welche der Anschlussdosen 20a-c der Nutzer seinen Stecker eingesteckt hat. Diese Überprüfung kann beispielsweise für eine Dauer von drei bis fünf Minuten andauern.

Wird nach Ablauf dieser Zeit kein eingesteckter Stecker detektiert, so beendet die Steuereinrichtung 22 den Vorgang und ein Strombezug ist nur nach erneuter Authentifizierung möglich.

Wird innerhalb der vorgegebenen Zeit ein Stecker detektiert, wird an die Steuereinrichtung 22 mitgeteilt, welche der Anschlussdosen 22a-c belegt wurde.

Anschließend führt die Steuereinrichtung 22 eine Überprüfung des zugeordneten Strommessgerätes 16a-c durch und liest einen entsprechenden Anfangszählerstand aus. Auch wird die Steuereinrichtung 22 dann den der entsprechenden Anschlussdose 20a zugeordneten Schalter 18a schließen.

Darüber hinaus kann die Steuereinrichtung 22 die Verriegelungsmittel 32 aktivieren und den Stecker in der Anschlussdose 18a verriegeln.

Je nach Einstellung kann nach dieser ersten Inbetriebnahme eine Nutzungsdauer zu laufen beginnen. Die Nutzungsdauer kann vorkonfiguriert sein oder durch den Nutzer angegeben werden. Nach Ablauf der Nutzungsdauer wird der Schalter 18a geöffnet und der Endzählerstand des Stromzählers 16a ausgelesen.

Auch ist es möglich, dass überwacht wird, ob der Stecker von der Anschlussdose 20a abgezogen wurde, was jedoch bedingt, dass die Verriegelungsmittel 32 nicht aktiviert werden. Eine weitere Option besteht darin, dass der Nutzer 30 erneut seinen Token an den Nahfeldleser 22 hält und der Prozessor 22a registriert, dass der entsprechende Nutzer seinen Nutzungsvorgang beenden möchte. Da der Prozessor 22a zuvor den entsprechenden Schalter geschlossen hat und weiß, an welcher Anschlussdose 20a der Nutzer seinen Stecker angesteckt hat, kann er nun den Schalter 18a öffnen und gegebenenfalls die Verriegelung 32 der Anschlussdose 20a öffnen.

Nach dem Beenden des Nutzungsvorgangs liest die Steuereinrichtung 22 den Endzählerstand von dem Strommessgerät 16a aus.

Der Endzählerstand, der Anfangszählerstand sowie die Nutzerkennung und beispielsweise auch Zeitinformationen sowie zusätzliche Informationen, beispielsweise Sicherheitsinformationen, Fehlerkorrekturinformationen, Informationen zum Baustellenschaltschrank und dergleichen, werden dann von der Kommunikationseinheit 24 über das Weitverkehrsnetz 26 an den Server 28 übermittelt.

In dem Server 28 wird aus dem Anfangszählerstand und dem Endzählerstand ein Differenzzählerstand errechnet und hieraus abhängig von einem Stromtarif ein Abrechnungswert bestimmt. Dieser Abrechnungswert wird zusammen mit der Nutzerkennung gegebenenfalls einer Teilnehmerkennung zugeordnet. Da mehrere Nutzerkennungen einer Teilnehmerkennung zugeordnet sein können, ist es möglich, dass eine Abrechnung gegenüber einer Teilnehmerkennung so erfolgt, dass verschiedenste Nutzer verschiedenste Baustellenschaltschränke 2 genutzt haben aber dennoch eine einheitliche Rechnung für die Teilnehmerkennung erzeugt wird.

Eine weitere Option zur Freigabe des Baustellenschaltschranks 2 besteht darin, dass der Nutzer auf seinem mobilen Endgerät, beispielsweise ein Mobiltelefon, welches als Token30 fungiert, eine mobile Applikation geladen hat. Auf dieser mobilen Applikation kann der Nutzer seine Nutzerkennung eingeben. Die Nutzerkennung wird zunächst von der Applikation über das Weitverkehrsnetz 26 a den Server 28 übermittelt. Der Server 28 kann aus dem Speicher 28b eine Zuordnung der entsprechenden Nutzerkennung zu bestimmen Baustellenschaltschränken 2a-d auslesen. Die ausgelesenen Kennungen der Baustellenschaltschränke 2a-d kann der Server 28 wiederum über das Weitverkehrsnetz 26 an das Token 30 übermitteln. In der mobilen Applikation bekommt der Nutzer dann angezeigt, welche Baustellenschaltschränke er nutzen kann.

Zusätzlich zu der Kennung der Baustellenschaltschränke 2a-d kann der Server 28 auch eine Information vorhalten, welche Anschlussdosen 20a-c (anhand der Kennungen) überhaupt in einem Baustelleschaltschrank 2a-d installiert sind und/oder welche der Anschlussdosen 20a-c des entsprechenden Baustellenschaltschranks 2a-d unbelegt sind bzw. welche Schalter 18a-c noch geöffnet sind. Die entsprechenden Kennungen und Informationen von und zu Schaltern und/oder Anschlussdosen können ebenfalls an das mobile Endgerät 30 (wobei dabei jeweils die mobile Applikation gemeint sein kann) übertragen werden.

Auf dem mobilen Endgerät 30 kann der Nutzer dann einen entsprechenden Baustellenschaltschrank 2-d auswählen und in diesem eine entsprechende Anschlussdose 20a-c bzw. einen entsprechenden Schalter 18a-c.

An dem Baustellenschaltschrank 2 kann der Nutzer eine Kennungen des Baustellenschaltschranks ablesen oder mittels eines Barcodes, QR-Codes oder NFC Beacons über die mobile Applikation erfassen. Hierdurch wird die Auswahl des Baustellenschaltschranks erleichtert.

Anschließend kann der Nutzer mit der mobilen Applikation entweder an einer Anschlussdose 20a-c oder einem Schalter 18a-c erneut einen QR-Code, Barcode oder NFC Beacon einscannen oder eine Kennung ablesen und diese in seinem Mobilgerät bzw. der mobilen Applikation eingeben.

Nach dem entsprechenden Auswahlprozess kann der Nutzer bestimmen, dass er die ausgewählte Anschlussdose 20a-c bzw. den ausgewählten Schalter 18a-c nutzen möchte. Diese Nutzungsabsicht wird zusammen mit den Kennungen von Baustellenschaltschrank, Nutzerkennung und Kennungen der Anschlussdosen 20a-c bzw. Schalter 18a-c über das Weitverkehrsnetz 26 an den Server 28 übermittelt.

In dem Server 28 kann gegebenenfalls mittels des Prüfmoduls 28c erneut die Autorisierung und Authentifizierung des Nutzers für die Nutzung des ausgewählten Schalters 18a-c bzw. der Anschlussdose 20a-c in einer der Baustellenschaltschränke 2a-d überprüfen. Ergibt die Überprüfung, dass der Nutzer autorisiert ist, wird ein Freigabesignal durch das Freigabemodul 28d an den Baustellenschrank 2 übermittelt und dort mittels der Kommunikationseinheit 24 empfangen.

Diese Authentifizierung ermöglicht es der Steuereinrichtung 22 anhand der Information zu der Kennung des entsprechenden Schalters 18a-c bzw. der Anschlussdose 20a-c den jeweiligen Schalter 18a-c zu schließen. Anschließend liest die Steuereinrichtung 22 den Zählerstand des dem geschlossenen Schalters 18a-c zugeordneten Strommessgeräts 16a-c. Dieser Zählerstand kann von der Steuereinrichtung 22 über die Kommunikationseinheit 24 zusammen mit der Nutzerkennung und beispielsweise einer Kennung des Strommessgerätes 16a-c an den Server 28 übermittelt werden.

Der Nutzer bekommt auf seinem Endgerät 30 anschließend angezeigt, dass die Aktivierung des Schalters 18a erfolgreich war, in dem der Server 28 eine entsprechende Mitteilung über das Weitverkehrsnetz 26 an das Endgerät 30 übermittelt.

Möchte der Nutzer nunmehr den Vorgang beenden, kann er wiederum durch entsprechende Eingabe von Nutzerkennung, Baustellenschaltschrankkennung und Schalterkennung in seiner Applikation ggf. über den Server 28 entsprechend des Freigabeprozesses auch ein Ausschaltprozess durchführen. Nach Beendigung dieses Ausschaltprozesses wird der Schalter 18a geöffnet und die Steuereinrichtung 22 liest den Endzählerstand des geöffneten Schalters 18a von dem Strommessgerät 16a aus. Dieser Endzählerstand kann erneut wie der Anfangszählerstand auch an dem Server 28 übermittelt werden. In dem Server 28 kann dann ein Abrechnungsvorgang angestoßen werden.

Mit Hilfe des gegenständlichen Verfahrens ist es erstmals möglich Baustrom transparent abzurechnen und die Nutzung eines Baustellenschaltschranks an Zugriffberechtigungen zu knüpfen.

### Bezugszeichenliste

- 2: Baustellenschrank
- 4: Gehäuse
- 6: Türe
- 6a: Verriegelungsmittel
- 8: Standfüße
- 10: Elektrische Zuleitung
- 12: Anschlussleiste
- 14a-c: Sicherung
- 16a-c: Strommessgerät
- 18a-c: Schalter
- 20a-c: Anschlussdose
- 22: Steuereinrichtung
- 22a: Prozessor
- 22b: Speicher
- 22c: Nahfeldleser
- 22d: Verbindung
- 24: Kommunikationseinheit
- 26: Weitverkehrsnetz
- 28: Server
- 28a: Prozessor
- 28b: Speicher
- 28c: Prüfmodul
- 28d: Freigabemittel
- 30: Token
- 32: Verriegelungsmittel

## Patentansprüche

1. Mobiler Baustellenschaltschrank (2) mit
- einem Gehäuse (4),
- zumindest zwei in dem Gehäuse (4) angeordneten elektrischen Anschlussdosen (20),
- einem zumindest einer der Anschlussdosen zugeordneten, in dem Gehäuse (4)angeordneten Schalter (18), und
- zumindest einem zumindest einem der Schalter (18) zugeordneten Zähler (16), wobei
- ein elektrischer Anschlusspunkt innerhalb des Gehäuses (4) zumindest über den Zähler (16) und den Schalter (18) mit den Anschlussdosen (20) elektrisch verbindbar ist,
wobei eine in dem Gehäuse (4) angeordnete Steuereinrichtung (22) dazu eingerichtet ist, zumindest einen der Schalter (18) abhängig von einer Authentifizierung zu schließen und dabei einen Anfangszählerstand des dem geschlossenen Schalter (18) zugeordneten Zählers (16) zu erfassen,
**dadurch gekennzeichnet,**
- **dass** der Zähler dazu eingerichtet ist, eine elektrische Leistung oder eine Stromstärke zu erfassen und dass der Zähler (16) oder die Steuereinrichtung dazu eingerichtet ist, bei einem Überschreiten der erfassten elektrischen Leistung oder der Stromstärke über einen Grenzwert den dem Zähler (16) zugeordneten Schalter (18) für eine definierte Zeit zu öffnen.

2. Mobiler Baustellenschaltschrank nach Anspruch 1,
**dadurch gekennzeichnet,**
- **dass** die Steuereinrichtung (22) mit einem Kommunikationsmodul (24) zur Kommunikation über ein Weitverkehrsnetz mit einem entfernten Server (28)eingerichtet ist.

3. Mobiler Baustellenschaltschrank nach Anspruch 1 oder 2,
**dadurch gekennzeichnet,**
- **dass** die Steuereinrichtung (22) mit einem Überwachungsmodul zum Überwachen eines Anschlusses eines Steckers an einer einem Schalter (18) zugeordneten Anschlussdose (20) eingerichtet ist.

4. Mobiler Baustellenschaltschrank nach Anspruch 3,
**dadurch gekennzeichnet,**
- **dass** die Steuereinrichtung (22) zum Erfassen eines Endzählerstands des Zählers (16) eingerichtet ist, an dessen zugeordneter Anschlussdose (20) ein Abziehen eines Steckers detektiert wurde.

5. Mobiler Baustellenschaltschrank nach einem der Ansprüche 3 oder 4,
**dadurch gekennzeichnet,**
- **dass** die Steuereinrichtung (22) zum Öffnen des Schalters (18) eingerichtet ist an dessen zugeordneter Anschlussdose (20) ein Abziehen eines Steckers detektiert wurde.

6. Mobiler Baustellenschaltschrank nach einem der vorangehenden Ansprüche,
**dadurch gekennzeichnet,**
- **dass** die Steuereinrichtung (22) dazu eingerichtet ist, den Schalter (18) abhängig von der Authentifizierung und/oder abhängig von während der Authentifizierung erfasster Zusatzdaten für eine Nutzungsdauer zu schließen und zum Erfassen eines Endzählerstands des Zählers (16), der dem so geschlossenen Schalter (18) zugeordnet ist, nach Ablauf der Nutzungsdauer.

7. Mobiler Baustellenschaltschrank nach einem der vorangehenden Ansprüche,
**dadurch gekennzeichnet,**
- **dass** jeweils genau ein Schalter (18) genau einer Anschlussdose (20) zugeordnet ist oder dass jeweils ein Schalter (18) einer Mehrzahl an Anschlussdosen (20) zugeordnet ist.

8. Mobiler Baustellenschaltschrank nach einem der vorangehenden Ansprüche,
**dadurch gekennzeichnet,**
- **dass** jeweils ein Zähler (16) genau einem Schalter (18) zugeordnet ist oder dass jeweils ein Zähler (16) einer Mehrzahl an Schaltern (18) zugeordnet ist.

9. Mobiler Baustellenschaltschrank nach einem der vorangehenden Ansprüche,
**dadurch gekennzeichnet,**
- **dass** die Steuereinrichtung (22) zum Ansteuern eines an einer Anschlussdose angeordneten Sperrmoduls (32)nach einer erfolgten Authentifizierung eingerichtet ist, wobei die Steuereinrichtung (22) das Sperrmodul (32) zum mechanischen Verriegeln eines an der Anschlussdose (20) angeschlossenen Steckers aktiviert und/oder dass die Steuereinrichtung (22) zum Ansteuern eines an einer Anschlussdose (20) angeordneten Sperrmoduls (32)eingerichtet ist, wobei die Steuereinrichtung das Sperrmodul (32) zum mechanischen Entriegeln eines an der Anschlussdose (20) angeschlossenen Steckers aktiviert.

10. Mobiler Baustellenschaltschrank nach einem der vorangehenden Ansprüche,
**dadurch gekennzeichnet,**
- **dass** die Steuereinrichtung (22) dazu eingerichtet ist, abhängig von einer Authentifizierung einen einer Anschlussdose (20) zugeordneten Fehlstromschutzschalter zu schließen.

## Claims

1. Mobile construction site switch cabinet (2) with
- a housing (4),
- at least two electrical connection sockets (20) arranged in the housing (4),
- a switch (18) assigned to at least one of the connection sockets and arranged in the housing (4), and
- at least one meter (16) assigned to at least one of the switches (18), wherein
- an electrical connection point within the housing (4) can be electrically connected to the connection sockets (20) at least via the meter (16) and the switch (18),
wherein a control device (22) disposed in the housing (4) is adapted to close at least one of the switches (18) in response to authentication and to obtain an initial meter reading of the meter (16) associated with the closed switch (18), **characterized in that**
- the meter is arranged to detect an electrical power or a current strength and **in that** the meter (16) or the control device is arragned to open the switch (18) assigned to the meter (16) for a defined time when the detected electrical power or the current strength exceeds a limit value.

2. Mobile construction site switch cabinet according to claim 1,
**characterized in that**
- the control device (22) is equipped with a communication module (24) for communication via a wide area network with a remote server (28).

3. Mobile construction site switch cabinet according to claim 1 or 2,
**characterized in that**
- the control device (22) is equipped with a monitoring module for monitoring a connection of a plug to a connection socket (20) assigned to a switch (18).

4. Mobile construction site switch cabinet according to claim 3,
**characterized in that**
- the control device (22) is set up for detecting an end meter reading of the meter (16), at the associated connection socket (20) of which a disconnection of a plug was detected.

5. Mobile construction site switch cabinet according to one of the claims 3 or 4,
**characterized in that**
- the control device (22) is arranged to open the switch (18), at the associated connection socket (20) of which a disconnection of a plug has been detected.

6. Mobile construction site switch cabinet according to one of the preceding claims,
**characterized in that**
- the control device (22) is arranged to close the switch (18) for a period of use as a function of the authentication and/or as a function of additional data recorded during the authentication and to detect an end meter reading of the meter (16) which is assigned to the switch (18) thus closed after the period of use has expired.

7. Mobile construction site switch cabinet according to one of the preceding claims,
**characterized in that**
- in each case exactly one switch (18) is assigned exactly to one connection socket (20), or **in that** in each case one switch (18) is assigned to a plurality of connection sockets (20).

8. Mobile construction site switch cabinet according to one of the preceding claims,
**characterized in that**
- in each case one meter (16) is assigned to exactly one switch (18), or **in that** in each case one meter (16) is assigned to a plurality of switches (18).

9. Mobile construction site switch cabinet according to one of the preceding claims,
**characterized in that**
- the control device (22) is arranged to actuate a locking module (32) which is arranged at a connection socket after authentication has taken place, the control device (22) activating the locking module (32) for mechanically locking a plug which is connected to the connection socket (20) and/or **in that** the control device (22) is arranged to actuate a locking module (32) which is arranged at a connection socket (20), the control device activating the locking module (32) for mechanically unlocking a plug which is connected to the connection socket (20).

10. Mobile construction site switch cabinet according to one of the preceding claims,
**characterized in that**
- the control device (22) is configured to close a residual current circuit breaker assigned to a terminal box (20) as a function of authentication.

## Revendications

1. Armoire de distribution électrique mobile de chantier (2) comprenant :
- un coffret (4),
- au moins deux boîtes de raccordement électrique (20) disposées dans le coffret (4),
- un commutateur (18) associé à au moins l'une des boîtes de raccordement et disposé dans le coffret (4), et
- au moins un compteur (16) associé à au moins l'un des commutateurs (18),
où un point de raccordement électrique situé à l'intérieur du coffret (4) peut être relié électriquement aux boîtes de raccordement (20), au moins par le compteur (16) et par le commutateur (18),
où un dispositif de commande (22) se trouvant dans le coffret (4) est mis en place pour fermer au moins l'un des commutateurs (18) en fonction d'une authentification et, ainsi, pour procéder au relevé d'une position initiale du compteur (16) associé au commutateur fermé (18),
**caractérisée**
- **en ce que** le compteur est mis en place pour détecter une puissance électrique ou une intensité de courant, et en ce que le compteur (16) ou le dispositif de commande est mis en place pour, dans le cas d'un dépassement, au-delà d'une valeur limite, de la puissance électrique ou de l'intensité de courant, qui a été détectée, ouvrir, pour une période de temps définie, le commutateur (18) associé au compteur (16).

2. Armoire de distribution électrique mobile de chantier selon la revendication 1,
**caractérisée**
- **en ce que** le dispositif de commande (22) comprenant un module de communication (24) est mis en place pour permettre la communication avec un serveur à distance (28) via un réseau étendu.

3. Armoire de distribution électrique mobile de chantier selon la revendication 1 ou 2,
**caractérisée**
- **en ce que** le dispositif de commande (22) comprenant un module de surveillance est mis en place pour servir à la surveillance d'un raccordement d'un connecteur à une boîte de raccordement (20) associée à un commutateur (18).

4. Armoire de distribution électrique mobile de chantier selon la revendication 3,
**caractérisée**
- **en ce que** le dispositif de commande (22) est mis en place pour procéder au relevé d'une position finale du compteur (16), un débranchement d'un connecteur ayant été détecté au niveau de la boîte de raccordement (20) associée audit compteur.

5. Armoire de distribution électrique mobile de chantier selon l'une des revendications 3 ou 4,
**caractérisée**
- **en ce que** le dispositif de commande (22) est mis en place pour procéder à l'ouverture du commutateur (18), un débranchement d'un connecteur ayant été détecté au niveau de la boîte de raccordement (20) associée audit commutateur.

6. Armoire de distribution électrique mobile de chantier selon l'une quelconque des revendications précédentes,
**caractérisée**
- **en ce que** le dispositif de commande (22) est mis en place pour fermer le commutateur (18), pour une durée d'utilisation, en fonction de l'authentification et/ou en fonction de données supplémentaires saisies au cours de l'authentification, et mis en place pour procéder, après expiration de la durée d'utilisation, au relevé d'une position finale du compteur (16) qui est associé au commutateur (18) par conséquent fermé.

7. Armoire de distribution électrique mobile de chantier selon l'une quelconque des revendications précédentes,
**caractérisée**
- **en ce que** précisément un commutateur (18) est à chaque fois associé précisément à une boîte de raccordement (20), ou bien en ce qu'un commutateur (18) est à chaque fois associé à une pluralité de boîtes de raccordement (20).

8. Armoire de distribution électrique mobile de chantier selon l'une quelconque des revendications précédentes,
**caractérisée**
- **en ce que** précisément un compteur (16) est à chaque fois associé précisément à un commutateur (18) ou bien en ce qu'un compteur (16) est à chaque fois associé à une pluralité de commutateurs (18).

9. Armoire de distribution électrique mobile de chantier selon l'une quelconque des revendications précédentes,
**caractérisée**
- **en ce que** le dispositif de commande (22) est mis en place pour servir, après une authentification effectuée avec succès, à l'activation d'un module de blocage (32) disposé sur une boîte de raccordement (20), où le dispositif de commande (22) active le module de blocage (32) servant au verrouillage mécanique d'un connecteur raccordé à la boîte de raccordement (20) et/ou en ce que le dispositif de commande (22) est mis en place pour servir à l'activation d'un module de blocage (32) disposé sur une boîte de raccordement (20), où le dispositif de commande active le module de blocage (32) servant au déverrouillage mécanique d'un connecteur raccordé à la boîte de raccordement (20).

10. Armoire de distribution électrique mobile de chantier selon l'une quelconque des revendications précédentes,
**caractérisée**
- **en ce que** le dispositif de commande (22) est mis en place pour fermer, en fonction d'une authentification, un commutateur de sécurité protégeant contre les courants de fuite, ledit commutateur de sécurité étant associé à une boîte de raccordement (20).
